(19) **Europäisches Patentamt / European Patent Office / Office européen des brevets**

(11) **EP 2 949 367 A1**

(12) **EUROPEAN PATENT APPLICATION**

(43) Date of publication:
02.12.2015 Bulletin 2015/49

(21) Application number: 15165995.0

(22) Date of filing: 30.04.2015

(51) Int Cl.:
*A63B 69/16* (2006.01)  *A63B 21/005* (2006.01)
*A63B 21/22* (2006.01)  *A63B 22/06* (2006.01)
*G01L 3/00* (2006.01)  *A63B 21/008* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **30.05.2014 IT MI20141014**

(71) Applicant: **Studio A.I.P. S.R.L.**
**21040 Oggiona con Santo Stefano (VA) (IT)**

(72) Inventors:
• **Brivio, Marco**
**I-21040 OGGIONA CON SANTO STEFANO (VA) (IT)**
• **Brivio, Paolo**
**I-21040 OGGIONA CON SANTO STEFANO (VA) (IT)**

(74) Representative: **Brasca, Marco**
**PGA S.r.l.**
**Via Mascheroni, 31**
**20145 Milano (IT)**

(54) **ERGOMETRIC BRAKE FOR EXERCISE MACHINES AND EXERCISE MACHINE COMPRISING SAID ERGOMETRIC BRAKE**

(57) The present invention relates to an ergometer brake for exercise machines, preferably of cycling type, comprising: a rotor (17) rotatable around a respective rotation axis (X-X) and operatively connectable to actuation means (P) configured to be moved by a human user; a stator (22) coaxial with the rotation axis (X-X) and constrainable to a fixed support element (8); braking means (30, 32) operatively active between the rotor (17) and the stator (22); at least one torsional load cell (33) configured for detecting the torque exchanged between the rotor (17) and the stator (22); wherein the torsional load cell (33) is part of the rotor (17) and/or of the stator (22). The present invention also regards an exercise machine comprising the abovementioned ergometer brake, wherein the machine is for example a cyclette or comprises a support structure (1) for a bicycle frame (2) on which it can be mounted/dismantled/housed in the same manner in which a normal bicycle wheel is mounted. The ergometer brake is obtained in a manner such that it can be mounted/housed in place of a normal bicycle wheel, and therefore all the sprockets of the bicycle can be used.

FIG.1

EP 2 949 367 A1

# FIG.5

# FIG.6

**Description**

<u>Field of the finding</u>

The object of the present invention is an ergometer brake for exercise machines and an exercise machine equipped with such ergometer brake. In particular, the present invention refers to an ergometer brake applied to machines used in the cycling field and intended for training and/or executing performance tests (e.g. for determining the anaerobic threshold) and/or posture tests for a cyclist.

<u>Background of the finding</u>

An ergometer brake is by definition a device adapted to oppose and to measure the work developed by the muscles of a human being, usually but not exclusively a sports enthusiast and/or athlete.

In cycling, ergometer brakes are known that are adapted to allow the cyclist to simulate pedaling on road and, due to particular instruments, allow training and/or measuring the work carried out by the athlete. For example, the public document US 5656001 illustrates a bicycle provided with frame, saddle, pedals and handlebar, in which the traction wheel of the bicycle is connected via drive to the braking system, with consequent collateral energy dispersions via friction and/or slipping of the wheel. The public document US 2010/0179030 instead illustrates a cyclette provided with a free wheel made of diamagnetic material, connected to the pedals and rotatably mounted on a rear fork of the frame and with an assembly of permanent magnets mounted adjacent to the rear fork. The assembly of magnets exerts a magnetic force on the free wheel that can be adjusted by varying the position and number of the magnets themselves.

Also known are training apparatuses capable housing and supporting a bicycle. For example, the public document US 6,945,917 illustrates an apparatus comprising a support frame capable of supporting the frame of a bicycle and a unit coupled to the support frame and adapted to generate resistance to the user's pedaling action. The unit comprises a free wheel installed in place of the rear wheel of the bicycle and a magnetic field source. The free wheel is constituted by a plurality of segments made of non-magnetic and conductive material. The magnetic field source comprises a C-shaped body that delimits a slit in which a radially outer portion of the free wheel is housed. A winding is wound around the C-shaped body and is connected to a current source in order to generate a variable magnetic field in the slit.

In both cases, the braking occurs by exploiting the parasitic currents directly on a fake wheel that acts as rotor/flywheel and is provided with only one sprocket, which is an integral part of the ergometer brake.

The document EP 2 703 051 illustrates a device for training with the bicycle that comprises a frame to be abutted against the ground and a pulley provided with a support pin provided with ratios and to which the rear fork of a bicycle is constrained. The device comprises a flywheel group with a magnetic brake. The flywheel group is mounted on the frame and connected to the pulley by means of a belt. The flywheel group comprises a mounting plate which is rotatably mounted on the frame and is locked with respect to the frame by a bracket on which strain gauges have been installed. The flywheel group comprises an element made of ferrous material provided with a pin, rotatable around a respective axis and connected by means of the belt to the pulley. A plurality of electromagnetic elements mounted on a core are mounted fixed with respect to the frame and constitute, together with the element, part of the magnet brake.

<u>Summary</u>

The known parasitic current systems based on electromagnets measure the current that flows in the coils and, together with the rotor speed, estimate the braking thereof.

The Applicant has observed that the measurement of the torque developed by the cyclist is indirect and subject to errors. The result of this estimate can in fact differ, even greatly, from reality, since the heat due to the dispersion of the parasitic currents in the conductive metal alters the conductivity of the conductor itself. When permanent magnets are used instead, the braking must be qualitatively managed. It follows that the braking systems of known type operate estimates of the braking torque by offsetting the value thereof and for this reason may have to be recalibrated even after every use.

In such context, the Applicant perceived the need to improve the ergometer brakes of known type, in particular with reference to the measurement of the torque exerted by the user. Hence, one objective of the present invention is to propose an ergometer brake for exercise machines that allows obtaining a direct, instantaneous, continuous and hence precise measurement of the twisting torque exerted on the brake.

In the present description and in the enclosed claims, by exercise machine it is generically intended an apparatus adapted to be interfaced and to be moved, by working the muscular apparatus, by a human user for the purpose for example of training and/or of executing performance tests and/or posture tests.

The Applicant has found that the above-indicated objects and still others can be attained by integrating a load cell in the stator and/or in the rotor of the ergometer brake.

In particular, the above-indicated objects and still others are substantially attained by an ergometer brake for exercise machines according to one or more of the enclosed claims and/or in accordance with one or more of the following aspects. More specifically, according to one aspect, the present invention regards an ergometer brake for exercise machines, comprising: a rotor rotatable around a respective rotation axis and operatively connectable to actuation means configured to be moved by a human user; a stator coaxial with the rotation axis and constrainable to a fixed support element; braking means operatively active between the rotor and the stator; at least one torsional load cell configured for detecting the torque exchanged between the rotor and the stator; wherein the torsional load cell is part of the rotor and/or of the stator.

In one aspect, the present invention also regards an exercise machine comprising an ergometer brake as defined in the enclosed claims and/or in one or more of the aspects described hereinbelow.

In one aspect, said exercise machine is of the type used in cycling and intended for training and/or executing of performance tests and/or posture tests of a cyclist.

In one aspect, said exercise machine is a cyclette. The ergometer brake according to the invention constitutes the rear wheel of the cyclette and the rotor is connected to the pedals of the cyclette that define said actuation means.

In a different aspect, said exercise machine comprises a support structure for a bicycle frame and comprises constraints for said frame. In one aspect, the support frame comprises constraints for the front fork of the frame of the bicycle and constraints for the rear fork of the frame of the bicycle. The ergometer brake according to the invention is situated in place of the rear wheel of the bicycle and the rotor is connected to the pedals of the bicycle which define said actuation means. The muscular action exerted by the user on the actuation means (the pedals in the case of bicycle and cyclette) rotates the rotor with a drive torque which opposes a braking torque developed by the braking means.

The rotor is directly connected to the drive torque generator (the user). For this reason, there are no additional dispersions of torque and/or torque dispersions due to the braking system. The Applicant has verified that the load cell obtained in the rotor or in the stator ensures a very accurate measurement.

In particular, in the case of exercise machine of cycling type, further advantages include the shape, compactness and weight distribution. Indeed, the rotor has the same rotation axis and center of gravity as that of a bicycle wheel, while rotor and stator are comprised in the volume of the wheel.

The present invention also relates to an ergometer brake (generically intended as a device for measuring the mechanical work completed by specific forces) also employable in certain fields beyond that of exercise machines, such as in testing actuators and/or motors of various type, comprising: a rotor rotatable around a respective rotation axis and operatively connectable to actuation means configured to be moved by a motor; a stator coaxial with the rotation axis and constrainable to a fixed support element; braking means operatively active between the rotor and the stator; at least one torsional load cell configured for detecting the torque exchanged between the rotor and the stator; wherein the torsional load cell is part of the rotor and/or of the stator.

In one aspect, the torsional load cell is obtained in the rotor. In this case, maximum accuracy is attained.

In one aspect, if the torsional load cell is obtained in the rotor, it is preferable to use a radio transmission system that is battery-powered or powered via cable by means of a rotary manifold for data transmission.

In one aspect, the torsional load cell is obtained in the stator. In this case, the power supply and communication are preferably obtained via cable and are therefore more easily attainable.

In one aspect, the stator and/or the rotor each comprise: a first portion; a second portion coaxial with the first portion; an intermediate coupling portion connected to the first portion and to the second portion, wherein the coupling portion is torsionally and elastically more deformable, around the rotation axis, than said first portion and second portion; wherein the intermediate coupling portion is part of said torsional load cell.

In one aspect, the first portion is radially inner, the second portion is radially outer and the coupling portion is radially intermediate.

In one aspect, the three portions are arranged axially side-by-side.

In one aspect, the coupling portion comprises a plurality of arms each extended between the first portion and the second portion. Preferably, said arms are extended along radial and/or substantially radial directions or axial and/or substantially axial directions.

If the three portions are axially side-by-side, the arms are preferably extended along an axial direction between the first portion and the second portion but the torsion always occurs around the rotation axis.

In one aspect, at least one of said arms is instrumented with deformation sensors (strain gauges). Preferably all the arms are instrumented with the deformation sensors. The instrumented arms are part of the torsional load cell.

For such purpose, in one aspect, the ergometer brake comprises a control unit operatively connected to the load cell and configured for translating the torsional deformation of the stator detected by the stain gauges into the braking torque which the stator exchanges with the rotor.

In one aspect, the first portion is annular and/or has a circular or polygonal shape. In one aspect, the second portion is annular, is extended around the first portion and is connected to the latter by said arms.

In one aspect, the stator is radially internal with respect to the rotor. In one aspect, the stator is radially outer with respect to the rotor. In one aspect, the stator is at least partly axially side-by-side the rotor. In one aspect, the rotor comprises concentric rings and the stator comprises concentric rings radially alternated with the concentric rings of the stator.

In one aspect, the rotor comprises a radially outer ring and a radially inner plate integrally connected to the ring.

In one aspect, the radially inner plate and the radially outer ring delimit a housing for the stator.

In one aspect, the rotor comprises at least one flywheel mass.

In one aspect, the radially outer ring constitutes said flywheel mass and has a moment of inertia comprised between about 0.01 Kg*m$^2$ and about 0.2 Kg*m$^2$.

In one aspect, the load cell is obtained in the radially inner plate.

In one aspect, the braking means are of the type without contact between stator and rotor.

In one aspect, the braking means are arranged at a radially outer surface of the stator and at a radially inner surface of the rotor that face each other.

In one aspect, the braking means are of magnetic and/or electromagnetic type.

In one aspect, the braking means are of the torque motor type.

In one aspect, the braking means are of the type with parasitic currents and/or with energy dispersion via magnetic hysteresis.

The ergometer brake according to the invention therefore does not generate additional friction that is hard to quantity, which would compromise an accurate measurement (by means of the load cell) of the torque.

In one aspect, the stator comprises magnetic material having the lowest magnetic hysteresis possible, preferably steel.

In one aspect, the load cell (the arms and/or the first portion and/or the second portion), preferably when it is part of the stator, is made of magnetic material, preferably of steel.

In one aspect, the rotor comprises magnetic material. In one aspect, the radially outer ring of the rotor is made of magnetic material, preferably of iron. In one aspect, the radially inner plate of the rotor is made of non-magnetic material, preferably of stainless steel or aluminum.

The selection of such materials allows increasing the magnetic flow and maximizing the braking efficiency of the magnetic and/or electromagnetic braking means.

In one aspect, the braking means comprise a plurality of magnets, wherein said magnets are electromagnets and/or permanent magnets. In one aspect the permanent magnets are made of neodymium.

In one aspect, said magnets are arranged in succession on the rotor or on the stator and respectively directed towards the stator or the rotor.

In one aspect, the magnets are arranged on a first surface of the stator or of the rotor facing a second surface of the rotor or of the stator. In one aspect, the first surface is a radially outer peripheral surface or radially inner peripheral surface. In one aspect, the second surface is a radially inner peripheral surface or a radially outer peripheral surface.

In one aspect, the permanent magnets each have the two poles thereof aligned along a radial direction, i.e. the poles are oriented in the direction of the segment that measures the distance between the rotor and the stator. In one aspect, adjacent magnets have the poles thereof reversed, i.e. the poles are alternated in a closed sequence N-S.

In one aspect, the second surface carries a member made of conductive material, preferably diamagnetic or paramagnetic, facing the magnets. Such member made of conductive material is the seat of the parasitic currents induced by the variable magnetic field generated by the permanent magnets, when in relative movement. In one aspect, said member is a layer made of conductive material that covers the second surface. In one aspect, said conductive material is copper or aluminum. In one aspect, said member made of conductive material has a width, measured in an axial direction, comprised between about 5mm and about 30mm.

In one aspect, an air space is delimited between the magnets and the member made of conductive material. In one aspect, a distance between the outer surface of each magnet and the second surface is comprised between about 0.1 mm and about 3mm. In one aspect, the distance between adjacent and successive magnets substantially corresponds to the distance between the outer surface of each magnet and the second surface. This arrangement is such to maximize the intensity variation of the magnetic field between each pair of adjacent magnets.

In one aspect, at the second surface, the rotor (or the stator) comprises a series of magnetic coils, preferably integrated in a ferrous matrix (torque motor).

In one aspect, the ergometer brake according to the invention comprises devices for moving the stator and the rotor with respect to each other in a manner so as to vary the area of the conductive member subjected to the magnetic field and adjust the magnetic force of the braking means. In one aspect, said movement is axial, i.e. the stator and/or the rotor are translated along a direction parallel to the rotation axis. In this manner, the other conditions being the same, the twisting/braking torque varies linearly with the area. According to this aspect of the invention, the magnetic field (which is a quadratic factor for the braking moment) is not varied but rather the area affected by the induced currents is varied, obtaining linear behavior. Therefore, the parasitic current and the amplitude of the magnetic hysteresis are the same in the brake, although the area of the brake subjected to these phenomena varies. For this type of selection, the greater the length of each magnet, the easier and more precise the braking adjustment will be, even if this will be slower.

In one aspect, said axial movement devices comprise at least one axial extension guide carrying the stator and at least one actuator, preferably of linear type, operatively active between the rotor and the stator. In one aspect, the ergometer brake according to the invention comprises a fixed support element that can be abutted against and/or constrained to the ground, in which said at least one guide is mounted on said fixed support element. In one aspect, the actuator is mounted on the fixed support element and is connected to the stator.

In one aspect, the ergometer brake comprises a hub coaxial with the rotation axis, rotatable with respect to the stator and integral in rotation with the rotor. In one aspect, the hub is rotatably installed on the fixed support element. In one aspect, the hub has a connection portion operatively connectable to the actuation means. In one aspect, the stator is arranged around the hub. In one aspect, the stator is mounted around the hub by means of bearings.

In one aspect, preferably if the exercise machine is of cycling type, said connection portion has a housing for the sprockets of a bicycle or a cyclette, connected/connectable to the pedals (actuation means) by means of a transmission chain. In one aspect, the hub also comprises a freewheel. In one aspect, the ergometer brake according to the invention is designed for being received between the arms of a normal bicycle, without having to be dismantled and able to receive all the sprockets of said bicycle on the hub. On the outside, this only requires a support that maintains the hub in the desired position, tilt and height. Consequently, the ergometer brake can be anchored to the ground or to another support.

In one aspect, the control unit is operatively connected to the movement devices, in particular to the actuator, and is configured for adjusting, preferably by a closed loop, the braking torque of the braking means according to a preset value.

In one aspect, the ergometer brake according to the invention comprises at least one sensor adapted to detect the rotation speed of the rotor (e.g. a proximity sensor that detects the passage of reference elements of a tonewheel). In one aspect, said sensor is operatively connected to the control unit. In one aspect, a sensor detects the rotation speed of the rotor and a further sensor detects the rotation speed of the bicycle gear, so as to be able to calculate the ratio used (gear/sprocket).

The control unit, which can also comprise an external PC, comprises at least one processing unit and at least one memory. The control unit is configured for receiving a first signal from the load cell and translating it into the braking torque and for receiving a second signal from the speed sensor and translating it into the rotation speed of the rotor. The control unit can comprise, in the memory thereof, data relative to a predetermined progression (e.g. over time and/or spatial) of the braking torque that one desires to obtain (and hence of the torque developed by the user) and/or of the braking power (and hence of the power developed by the user) which can be preset by the user. The control unit commands the actuator on the basis of the signals received such that the actual braking torque dynamically follows the preset braking torque and/or such that the braking power dynamically follows the preset braking power.

The present invention also regards a method for controlling the braking torque of an ergometer brake, preferably in an exercise machine, in particular of cycling type, comprising:

- braking a rotor operatively connected to actuation means moved by a user by means of braking means operatively active between a stator and said rotor; wherein preferably the rotor and/or the stator and/or the braking means and/or the actuation means comprise the characteristics of one or more of the underlined aspects and/or of the enclosed claims;
- directly detecting the torque exchanged between the rotor and the stator by means of at least one torsional load cell; wherein preferably the torsional load cell comprises the characteristics of one or more of the underlined aspects and/or of the enclosed claims;
- dynamically adjusting the braking torque of the braking means on the basis of the detected torque and of data relative to a desired braking torque.

Overall, the ergometer brake, the exercise machine and the method according to the invention allow a measured, accurate, controlled and direct braking, not influenced by significant friction.

Further characteristics and advantages will be clearer from the detailed description of a preferred but not exclusive embodiment of an exercise machine in accordance with the present invention.

Description of the drawings

Such description will be set forth hereinbelow with reference to the set of drawings, provided only as a non-limiting example, in which:

- figure 1 illustrates a side elevation view of an exercise machine coupled to the frame of a bicycle and provided with an ergometer brake according to the invention;

- figure 2 illustrates an enlarged view of the ergometer brake of figure 1 seen from the opposite side with respect to figure 1;
  - figure 3 illustrates an enlarged portion of the ergometer brake of figure 2;
  - figure 4 illustrates an enlarged element of the ergometer brake of figure 2;
  - figure 5 illustrates a sectional view of the ergometer brake of figure 2 in a first operative configuration;
  - figure 6 illustrates the view of figure 5 in a second operative configuration;
  - figure 6A illustrates an enlarged portion of figure 6;
  - figure 6B illustrates the portion of figure 6A in a different intermediate operative position between the configurations respectively illustrated in figure 5 and in figure 6;
  - figure 7 illustrates an enlarged portion of figure 5;
  - figure 8 illustrates one portion of the exercise machine according to a different embodiment of the ergometer brake;
  - figure 9 illustrates an enlarged view of the ergometer brake of figure 8 seen from the opposite side with respect to figure 8;
  - figure 10 illustrates a sectional view of the ergometer brake of figure 9.

Detailed description

With reference to the abovementioned figures, reference number 1 overall indicates an exercise machine according to the invention comprising an ergometer brake 100 according to the invention.

The illustrated exercise machine 1 is a support structure capable of supporting a bicycle frame 2. The support structure 1 comprises a main body 3 which is abutted against and possibly constrained to the ground by means of feet 4. Beams and/or levers are constrained to the main body 3, which are adapted to support the abovementioned frame 2 of the bicycle. In the illustrated embodiment, the support structure 1 has a front upright 5 that is vertically extended and has an upper end 6 provided with constraints for the feet (normally intended to receive the front wheel of the bicycle) of a front fork 7 of the frame 2 of the bicycle. The front upright 5 is constrained to a front portion of the main body 3. At a rear portion of the same main body 3, a support element 8 is constrained which is vertically extended and has an upper portion 9 thereof connected to constraints (described hereinbelow in the present text) for the feet (normally intended to receive the rear wheel of the bicycle) of a rear fork 11 of the bicycle.

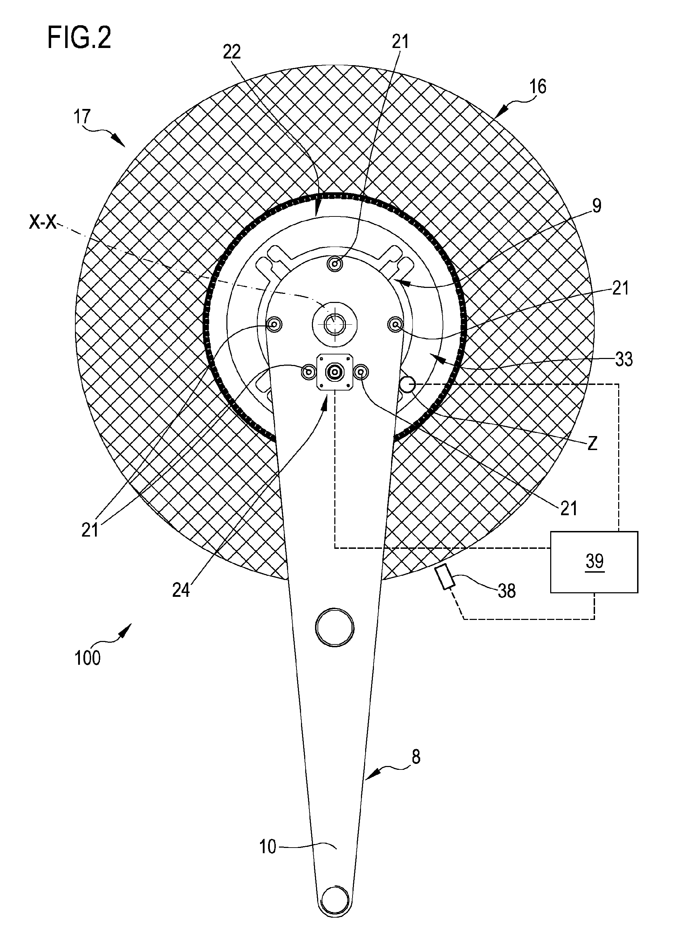

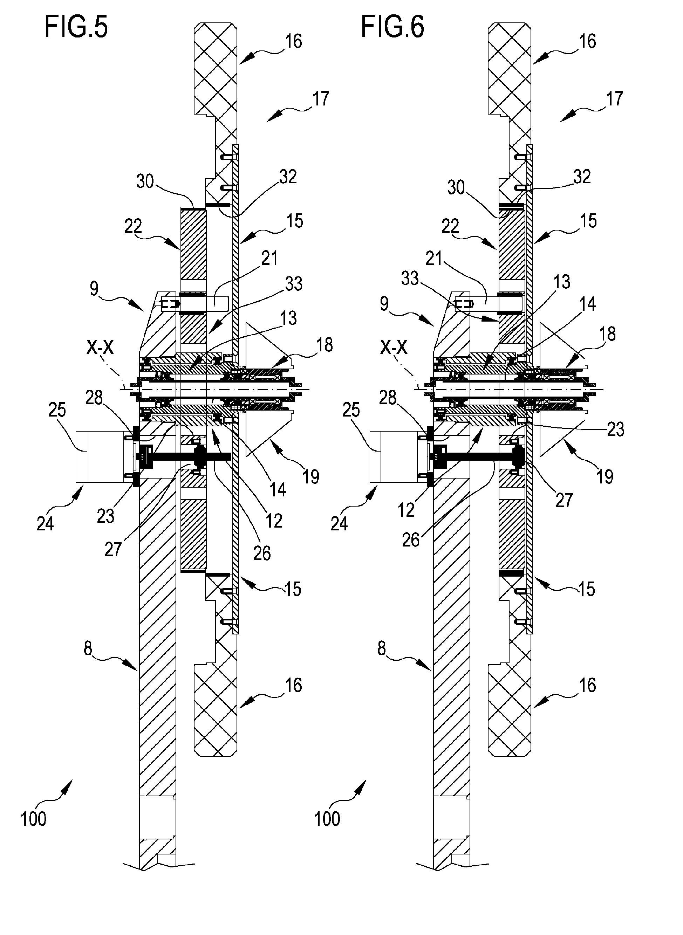

The support element 8 has the shape of an elongated plate (figure 2). The plate is extended in a plane perpendicular to a rotation axis "X-X" of the rear wheel of the bicycle. The abovementioned upper portion 9 has a through hole which houses a cylindrical support body 12 integral with the support element 8 (figures 5, 6 and 7). The cylindrical support body 12 has a first end inserted in the aforesaid through hole and integrally constrained to the support element 8 and a second end, opposite the first, which is projectingly extended from the support element 8. The cylindrical support body 12 is coaxial with the rotation axis "X-X" and houses a hub 13 therein. The hub 13 is rotatably coupled to the cylindrical support body 12, e.g. by means of bearings BB, so to be able to rotate around the rotation axis "X-X". The hub 13 houses a shaft 14 at its interior which is coaxially extended along said rotation axis "X-X" and is rotatably mounted in the hub 13, e.g. by means of bearings BB.

One end of the hub 13 exits from the second end of the cylindrical support body 12 and carries, integral therewith, a radially inner circular plate 15 that is coaxial with the rotation axis "X-X". The radially inner plate 15 has a central opening integrally constrained with the hub 13 and a radially outer zone constrained, e.g. by means of screws, to a radially outer ring 16, it too coaxial with the rotation axis "X-X".

The radially inner plate 15 preferably has a maximum diameter comprised between about 200mm and about 700mm and a thickness comprised between about 1 mm and about 10mm. Such radially inner plate 15 is made of non-magnetic material such as stainless steel or aluminum. Such radially inner plate 15 has the lowest moment of inertia possible.

The radially outer ring 16 preferably has a maximum diameter comprised between about 250mm and about 750mm and a thickness greater than that of the radially inner plate 15 and preferably comprised between about 5mm and about 30mm. Such radially outer ring 16 is made of magnetic material, such as iron. Such radially outer ring 16 has a polar moment of inertia preferably comprised between about 0.01 Kg*m$^2$ and about 0.2Kg*m$^2$.

The radially inner plate 15 is coupled to one face of the radially outer ring 16 situated on the opposite side with respect to the support element 8 in a manner such that said plate 15 and said ring 16 delimit a cylindrical volume coaxial with the rotation axis "X-X", closed on one side by the plate 15 and open towards the upper portion 9 of said support element 8.

The radially inner plate 15 and the radially outer ring 16 are part of a rotor 17 of the ergometer brake 100 according to the invention, of which the radially outer ring 16 constitutes a flywheel mass.

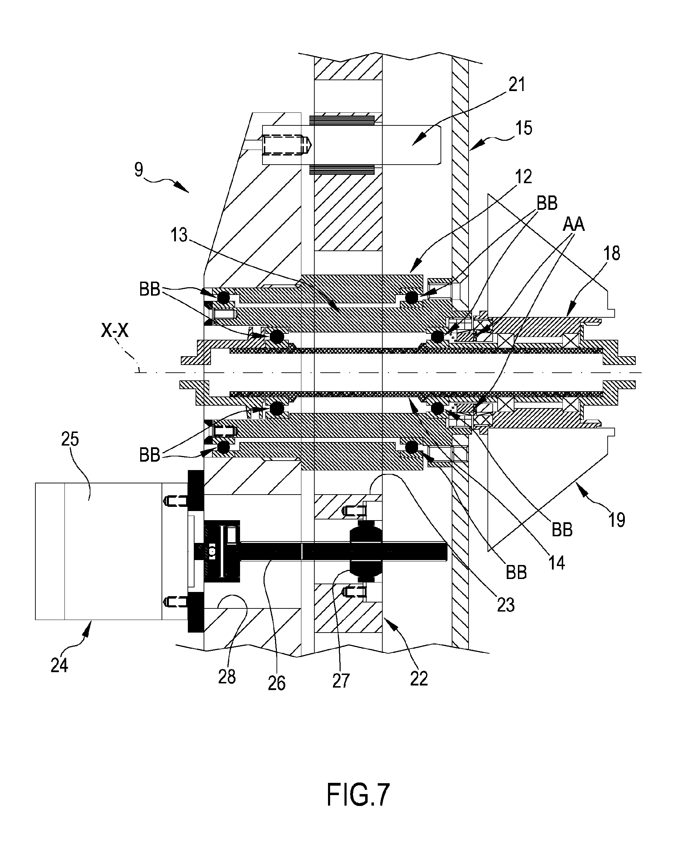

An end portion of the shaft 14 (figure 7) projects beyond the radially inner plate 15 and carries a bush 18 (connection portion) thereon, mounted on said shaft 14 by means of bearings and configured for receiving, in a removable manner, one or more sprockets 19 of the bicycle. The sprocket or sprockets 19 are fit around the bush 18 by making them axially slide, and they are integral with said bush 18 in the rotation around the rotation axis "X-X".

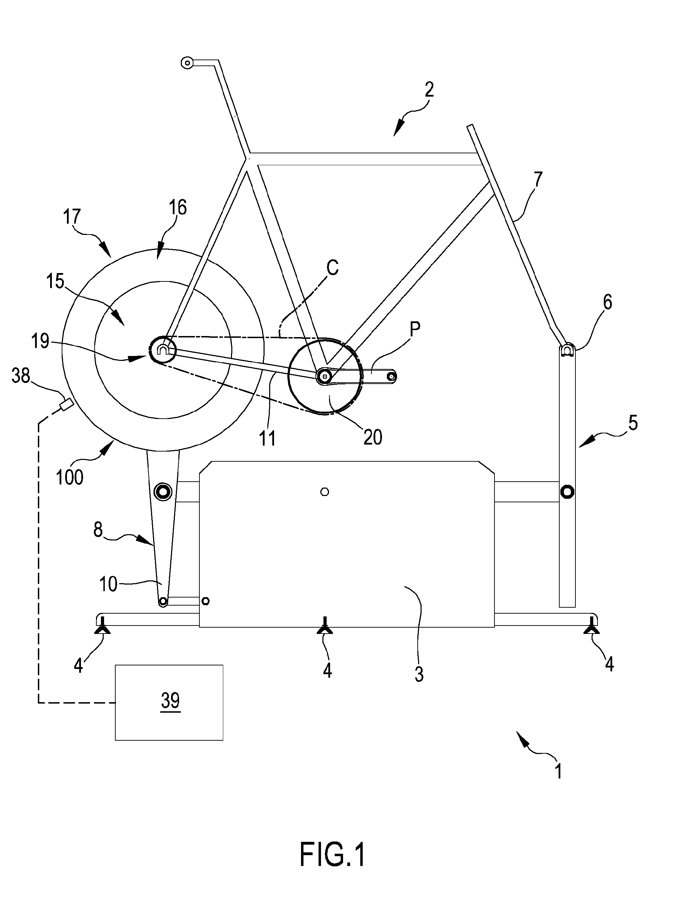

The bush 18 is constrained to the hub 13 by means of a freewheel AA (figure 7) in a manner so as to integrally rotate with the hub 13 in a first rotation sense corresponding to the hypothetical advancement of the bicycle (clockwise sense in figure 1) and instead to be uncoupled from the hub 13 and rotate independently from the same in a second rotation sense opposite the first. The sprockets 19 are connected/connectable to a gear 20 of the bicycle and hence to the pedal cranks "P" in a known manner by means of a chain "C". The pedal cranks "P" constitute actuation means configured to be moved by a human user and connectable to the rotor 17.

Opposite terminal ends of the shaft 14 have the abovementioned constraints, not illustrated, for the feet of the rear fork 11 of the bicycle. The shaft 14 is integral with the frame 2 of the bicycle during the use of the exercise machine 1 according to the invention while the hub 13, the rotor 17 and the sprocket/sprockets 19 rotates/rotate with respect to the shaft 14 and with respect to the cylindrical support body 12. The upper portion 9 of the support element 8 has a plurality of guides constituted by rods or pins 21 arranged around the cylindrical support body 12, extended alongside said cylindrical support 12 and parallel to the rotation axis "X-X". The pins 21 are projectingly extended from the upper portion 9 towards the radially inner plate 15 of the rotor 17 (as is visible in figures 5, 6 and 7 which illustrate only one of said rods 21).

A stator disc or stator 22 coaxial with the rotation axis "X-X" is mounted on said pins 21 that pass through guide holes obtained in the same stator 22. The stator 22 is made of magnetic material, e.g. steel. The stator 22 also has a central passage 23 within which the cylindrical support body 12 is situated. The stator 22 is therefore mounted around said cylindrical support body 12 without touching it (figures 5, 6 and 7).

An actuator 24 (figures 2, 5, 6 and 7) is mounted on the support element 8 and is connected to the stator 22 so as to be able to axially move it on the guides 21. In the illustrated embodiment, the actuator 24 comprises a motor body 25 installed at the upper portion 9 of the support element 8 and a worm screw 26 rotated by the motor body 24. On the thread of the worm screw 26, a drive nut 27 is engaged that is constrained to the stator 22. The drive nut 27 is inserted in a housing obtained in the stator 22. The motor body 24 is associated with a surface of the support element 8 opposite the stator 22 and the worm screw 26 passes through a respective hole 28 obtained in the upper portion 9 and is extended close to the radially inner plate 15 of the rotor 17.

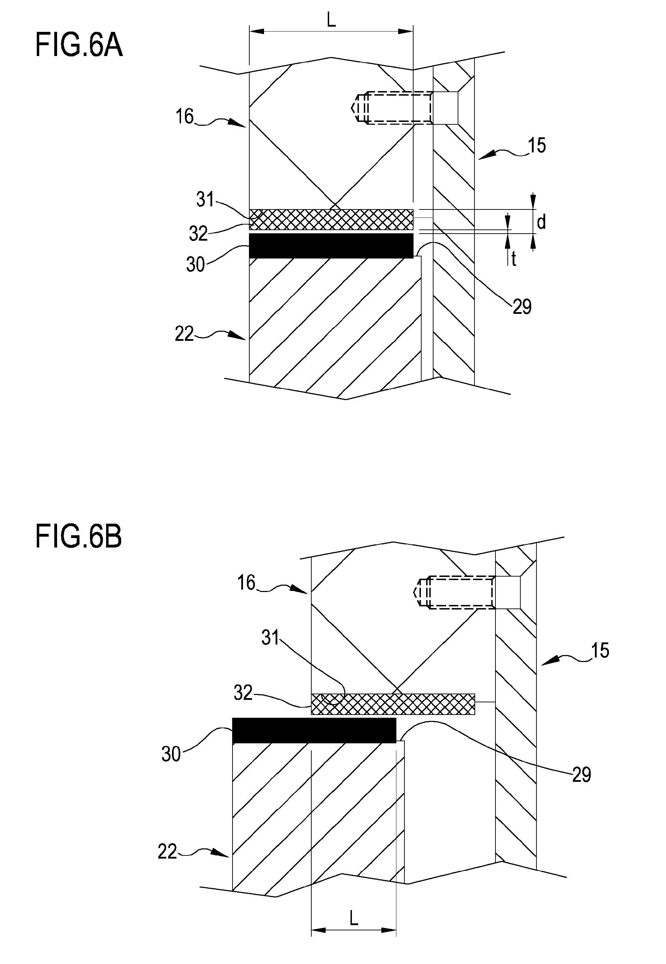

The actuator 24 is capable of axially moving the stator 22 with respect to the rotor 17 between a first position (figure 6 and 6A), in which the stator 22 lies completely within the cylindrical volume delimited by the rotor 17 (the thickness of the stator 22 is substantially equal to the axial depth of the cylindrical volume), and a second position (figure 5 and 6B), in which the stator 22 is partially or totally outside said cylindrical volume delimited by the rotor 17. In the first position, the stator 22 lies adjacent to the radially inner plate 15, without contact. In the second position, the stator 22 is spaced from the radially inner plate 15.

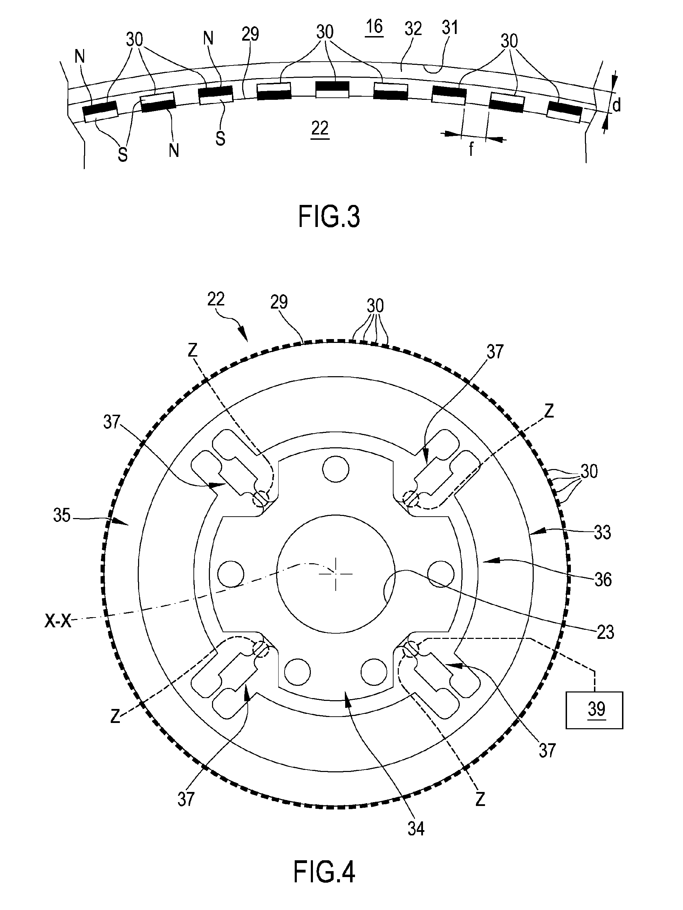

A first radially outer/peripheral and cylindrical surface 29, coaxial with the rotation axis "X-X", of the stator 22 carries a plurality of permanent magnets 30, preferably in neodymium, which follow each other along the circumferential extension of said first surface 29 (figures 3 and 4). The successive permanent magnets 30 are side-by-side but separated/spaced from each other. Each of the permanent magnets 30 has a South pole and a North pole aligned along a respective radial direction (referred to the rotation axis "X-X"). In addition, adjacent permanent magnets 30 have the poles N-S reversed with respect to each other (figure 3).

A second radially inner and cylindrical surface 31, coaxial with the rotation axis "X-X", of the radially outer ring 16 of the rotor 17 carries a layer of conductive material 32, preferably diamagnetic or paramagnetic, e.g. copper or aluminum.

When the stator 22 is in the first position, the first surface 29 and the second surface 31 are completely facing each other and the permanent magnets 30 face the layer of conductive material 32. The permanent magnets 30 have an axial size (measured parallel to the rotation axis "X-X") substantially equal to an axial size of the layer of conductive material 32. By axially moving the stator 22 between the first and the second position, it is possible to vary the mutual facing portion of the two surfaces 29, 30 and of the magnets 30 with the layer of conductive material 32.

Between a radially outer surface of the permanent magnets 30 and the layer of conductive material 32 facing thereto, an air space is delimited that has a radial thickness or size "t" comprised between about 0.1 mm and about 3mm (figure 6A). In addition, the distance "d" between the radially outer surface of the permanent magnets 30 and the second surface 31 is comprised between about 1 mm and about 20mm and, preferably, the distance "f" between adjacent and successive permanent magnets 30 preferably corresponds to said distance "d" between the outer surface of each magnet 30 and the second surface 29 (figure 3). Such is the minimum interspacing between the magnets that optimizes the magnetic flow.

The permanent magnets 30, each with magnetic induction B, together with the layer of conductive material 32 of radius r and a portion of the rotor 17 and of the stator 22 affected by the electromagnetic field generated by the relative motion of said rotor 17 and said stator 22 at angular speed $\Omega$, constitute braking means of magnetic type which oppose the action exerted on the pedal cranks "P" by the user/cyclist. Said braking means are thus of the type without contact between stator 22 and rotor 17 and exploit the parasitic currents and/or with energy dispersion via magnetic hysteresis.

The force of said magnetic brake 30, 32 can be adjusted by axially moving the stator 22 and the rotor 17 in a manner so as to vary the area A of the conductive member/layer 32 subjected to the magnetic field.

Indeed, the twisting/braking moment "$M_T$" generated by the braking means can be expressed with the following formula.

$$M_T \propto \frac{2\Pi}{f} \cdot \frac{B^2 \cdot r^3 \cdot A \cdot (d - t) \cdot \Omega}{R}$$

in which:

| | |
|---|---|
| f | Distance between two adjacent permanent magnets 30 (figure 3) |
| B | Intensity of the magnetic field |
| r | Radius of the conductive member 32 |
| A | Area of the section affected by the induced currents |
| d | Air gap (figures 3 and 6) |
| t | Air space thickness (figure 6A) |
| Ω | Angular rotation speed of the rotor 17 |
| R | Conductive material resistance of the conductive member 32 |

where "A" is equal to "L x l", in which "L" is substantially the axial width of the mutual facing portion between magnets 30 and conductive member 32 (figures 6A and 6B) and "l" is the length in circumferential sense of said portion. By axially moving the stator 22, "L" and thus "A" and "$M_T$" are varied.

In the embodiment illustrated in figures 1 to 7, the stator 22 integrates a torsional load cell 33 capable of detecting the braking torque exchanged between said stator 22 and the rotor 17.

As is more visible in figure 4, the stator 22 in fact comprises a first radially inner portion 34 which, in the illustrated embodiment, has a polygonal shape. The first portion 34 also has the central passage 23. A second radially outer portion 35 of the radially outer and annular stator 22 surrounds the first portion 34 and is coaxial with the rotation axis "X-X" and with said first portion 34. The first and the second portion 34, 35 are mutually and sealingly connected together by a radially intermediate coupling portion 36 defined by a plurality of radial arms 37. The radial arms 37 are torsionally and elastically more deformable than the first 34 and the second 35 portion taken separately. From a different standpoint, the intermediate coupling portion 36 is provided with through openings that delimit said radial arms 37 and render said portion 36 torsionally more deformable than the first and the second portion taken separately.

Said arms 37 have instrumented zones "Z", i.e. equipped with deformation sensors (strain gauges, not illustrated since *per se* known) configured for detecting the deformation of said arms 37 which is ascribable to the torque exchanged between the first portion 34 and the second portion 35 of the stator 22. The instrumented arms 37 thus define said torsional load cell 33.

A sensor 38 (schematically illustrated in figures 1 and 2) is adapted to detect the rotation speed of the rotor 17 or in any case a speed ascribable thereto. For example, the sensor 38 is a proximity sensor that detects the passage of the teeth or of other reference elements of a tonewheel, not illustrated, which rotates with the rotor 17 or the passage of the teeth of a sprocket or of the gear of the bicycle. The exercise machine 1 according to the invention comprises a control unit 39 (schematically illustrated in figures 1, 2 and 4) operatively connected to the load cell 33, to the speed sensor 38 and to the actuator 24. Said control unit 39 can be an external PC or a unit coupled to the ergometer brake 100 or it can comprise a unit coupled to the ergometer brake 100 connected or connectable to an external PC. The control unit 39 is of electronic type and comprises at least one CPU processing unit and at least one memory.

Data insertion devices (keyboard, mouse, touch screen, USB keys, other wired or wireless means) allow storing, in the memory of the control unit 39, a calculation and management program as well as data relative to a predetermined progression of the braking torque and/or of the braking power that one wishes to obtain.

The control unit 39 is configured to receive, through possible respective interface boards, a first signal from the load cell 33 and to translate it into the actual braking torque, and to receive a second signal from the speed sensor 38 and to translate it into the actual rotation speed of the rotor 17. The program stored in the memory is for example also configured for calculating the actual braking power.

The program stored in the memory is configured to compare the actual braking torque with the predetermined progression of the braking torque and/or to compare the actual braking power with the predetermined progression of the braking power and to calculate a correction signal that is sent to the actuator 24. The control unit 39 commands the actuator 24 through said correction signal such that the actual braking torque dynamically follows the preset braking torque and/or such that the braking power dynamically follows the preset braking power.

The program stored in the memory is then configured for controlling the braking torque of the ergometer brake 100 of the described machine.

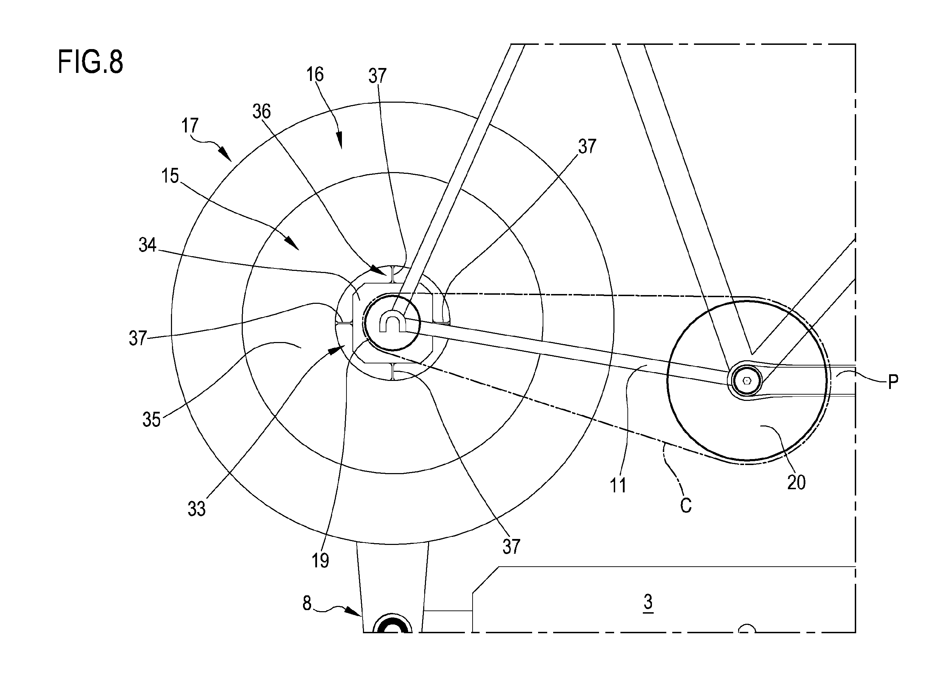

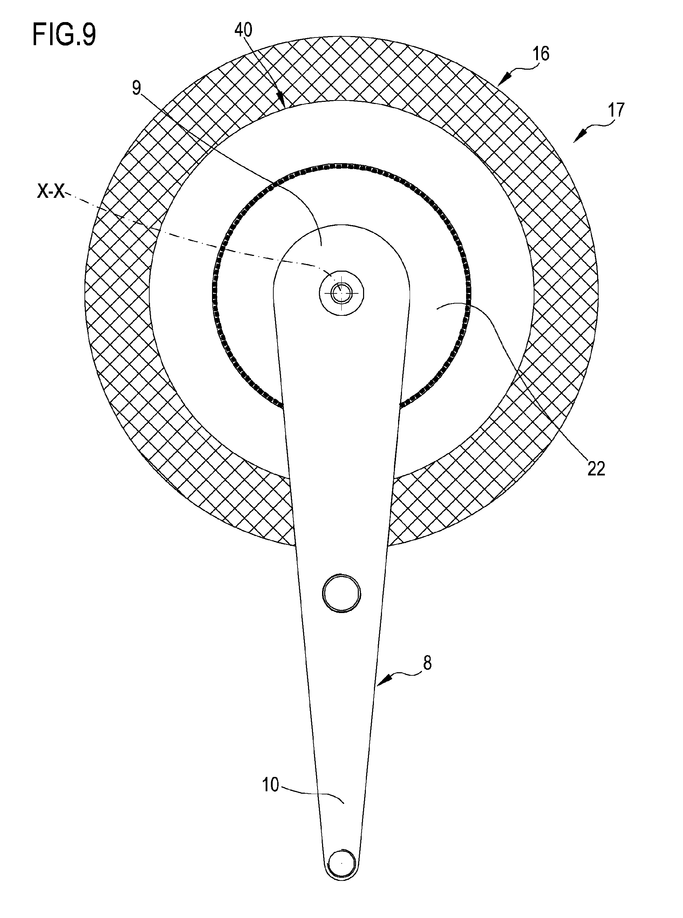

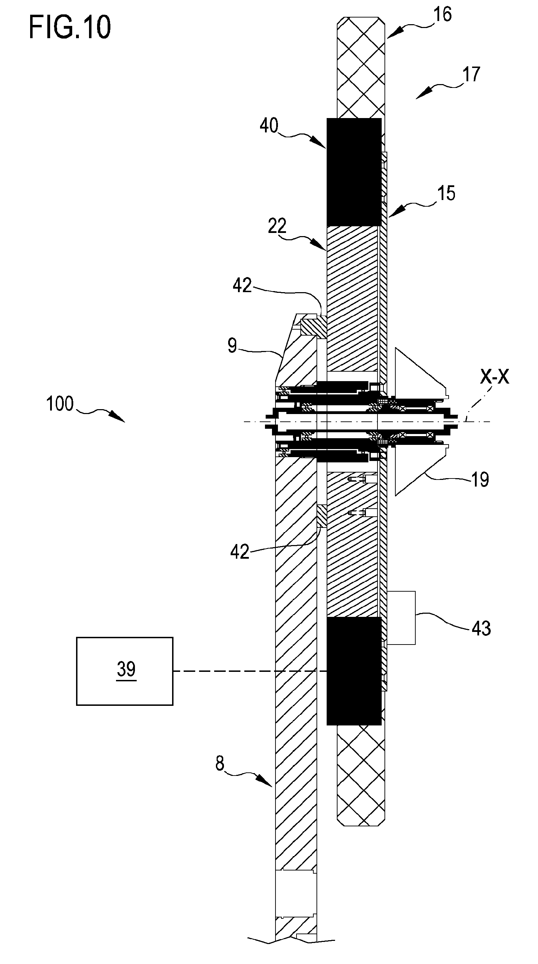

In a different embodiment, illustrated in figures 8, 9 and 10, the load cell 33 is not integrated in the stator 22 but in the rotor 17. In particular, as is visible in figure 8, the load cell 33 is obtained in the radially inner plate 15 which, at a portion thereof situated at the rotation axis X-X, has a first radially inner portion 34, a second radially outer portion 35 and an intermediate coupling portion 36 defined by radial arms 37 (the same reference numbers of the load cell 33 of the stator 22 illustrated in figure 4 were used). The load cell 33 is operatively connected to the control unit 39 by means of a radio transmission system 43 (figure 10), e.g. battery-powered or powered via cable by means of a rotary manifold, not illustrated.

In addition, in this different embodiment, in place of only the permanent magnets, the braking means comprise a torque motor 40. The magnets of the torque motor 40 are fixed on the first surface 29 of the stator 22 and magnetic coils integrated in an iron matrix are mounted on the rotor 17.

In another embodiment, the magnets of the torque motor 40 are fixed on the rotor 17 and magnetic coils integrated in an iron matrix are mounted on the surface 29 of the stator 22.

As can be observed in figure 10, according to such different embodiments, no axial movement is provided for the stator 22, so that this is fixedly constrained to the support element 8 by means of support pins 42 and the actuator 24 is not present. The adjustment of the braking force is carried out by varying the current in the coils of the torque motor 40 which, for such purpose, is thus operatively connected to the control unit 39, as schematically illustrated in figure 10.

A further embodiment, not illustrated, comprises the torque motor 40 as in figures 8,9,10, but the load cell 33 is integrated in the stator 22 (as in figures 1-7).

A further embodiment, not illustrated, comprises the motor with parasitic currents (as in figures 1-7) but the load cell 33 is integrated in the rotor 17 (as in figures 8,9,10).

The ergometer brake 100 in the various embodiments illustrated above can also be integrated in a cyclette instead of in the support structure for bicycles illustrated herein.

List of elements

| 1 | Exercise machine/support structure |
| 2 | Bicycle frame |
| 3 | Main body |
| 4 | Feet |
| 5 | Front upright |
| 6 | Upper end of the front upright |
| 7 | Front fork of the bicycle |
| 8 | Support element |
| 9 | Upper portion of the support element |
| 10 | Lower portion of the support element |
| 11 | Rear fork of the bicycle |
| 12 | Cylindrical support body |
| 13 | Hub |
| 14 | Shaft |
| 15 | Radially inner plate |
| 16 | Radially outer ring |
| 17 | Rotor |
| 18 | Bush |
| 19 | Sprockets |
| 20 | Bicycle gear |
| 21 | Guides or pins |
| 22 | Stator |
| 23 | Central passage |
| 24 | Actuator |
| 25 | Motor body |
| 26 | Worm screw |

27 Drive nut
28 Through hole
29 First surface
30 Permanent magnets
31 Second surface
32 Member/layer of conductive material
33 Torsional load cell
34 First portion of the load cell
35 Second portion of the load cell
36 Intermediate coupling portion
37 Radial arms
38 Speed sensor
39 Control unit
40 Torque motor
42 Support pins
43 Radio transmission system

**Claims**

1. Ergometer brake for exercise machines, comprising:

   a rotor (17) rotatable around a respective rotation axis (X-X) and operatively connectable to actuation means (P) configured to be moved by a human user;
   a stator (22) coaxial with the rotation axis (X-X) and constrainable to a fixed support element (8);
   braking means (30, 32) operatively active between the rotor (17) and the stator (22);
   at least one torsional load cell (33) configured for detecting the torque exchanged between the rotor (17) and the stator (22);
   wherein the torsional load cell (33) is part of the rotor (17) and/or of the stator (22);
   wherein the braking means (30, 32) are of the type without contact between stator (22) and rotor (17);
   wherein the braking means (30, 32) comprise a plurality of magnets (30) arranged on a first surface (29) of the stator (22) or of the rotor (17) facing a second surface (31) of the rotor (17) or of the stator (22);
   wherein the second surface (31) carries a member (32) made of conductive material;
   wherein the ergometer brake comprises devices (21, 24) for axially moving the stator (22) and the rotor (17) with respect to each other in a manner so as to vary the area of the conductive member (32) subjected to the magnetic field and adjust the magnetic force of the braking means (30, 32).

2. Ergometer brake according to the preceding claim, wherein the torsional load cell (33) is obtained in the rotor (17).

3. Ergometer brake according to claim 1 or 2, wherein the torsional load cell (33) is obtained in the stator (17).

4. Ergometer brake according to claim 2 or 3, wherein the stator (22) and/or the rotor (17) each comprise:

   a first portion (34);
   a second portion (35) coaxial with the first portion (34);
   an intermediate coupling portion (36) connected to the first portion (34) and to the second portion (35), wherein the coupling portion (36) is torsionally and elastically more deformable, around the rotation axis (X-X), than said first portion (34) and second portion (35);
   wherein the intermediate coupling portion (36) is part of said torsional load cell (33).

5. Ergometer brake according to the preceding claim, wherein the first portion (34) is radially inner, the second portion (35) is radially outer and the coupling portion (36) is radially intermediate.

6. Ergometer brake according to the preceding claim, wherein the coupling portion (36) comprises a plurality of arms (37), each extended substantially radially between the first portion (34) and the second portion (35); wherein at least one of said arms (37) is equipped with deformation sensors.

7. Ergometer brake according to the preceding claim, wherein all the arms (37) are instrumented with the deformation sensors.

8. Ergometer brake according to one of the preceding claims, wherein the stator (22) is radially internal with respect to the rotor (17); wherein the rotor (17) comprises a radially outer ring (16) and a radially inner plate (15) integrally connected to the ring (16); wherein the radially inner plate (15) and the radially outer ring (16) delimit a housing for the stator (22) and the radially outer ring (16) constitutes a flywheel mass.

9. Ergometer brake according to one of the preceding claims, wherein the magnets (30) are permanent magnets (30).

10. Ergometer brake according to one of the preceding claims, wherein the magnets (30) are arranged in succession on a first radially outer peripheral surface (29) of the stator (22) facing a second radially inner peripheral surface (31) of the rotor (17).

11. Ergometer brake according to one of the preceding claims, wherein the member (32) made of conductive material faces the magnets (30).

12. Ergometer brake according to one of the preceding claims, comprising a control unit (39) operatively connected to the load cell (33) and to the movement devices (21, 24) and configured to adjust, preferably by a closed loop, the braking torque of the braking means (30, 32).

13. Ergometer brake according to one of the preceding claims, comprising a hub (13) coaxial with the rotation axis (X-X), rotatable with respect to the stator (22) and integral in rotation with the rotor (17); wherein the hub (13) has a connection portion (18) having a housing for the sprockets (19) of a bicycle.

14. Ergometer brake according to claim 9, wherein the permanent magnets (30) each have the two poles thereof aligned along a radial direction and adjacent magnets (30) have the poles thereof reversed, i.e. the poles are alternated in a closed sequence N-S.

15. Exercise machine comprising an ergometer brake according to one or more of the preceding claims, wherein said machine is a cyclette or comprises a support structure (1) for a bicycle frame (2).

FIG.1

FIG.2

FIG.3

FIG.4

FIG.5

FIG.6

FIG.6A

16

31
32
30

22

L

15

d

t

29

FIG.6B

16

31
32

30

22

15

29

L

FIG.7

FIG.8

FIG.9

FIG.10

**EP 2 949 367 A1**

Europäisches
Patentamt
European
Patent Office
Office européen
des brevets

## EUROPEAN SEARCH REPORT

Application Number

EP 15 16 5995

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 703 051 A2 (WAHOO FITNESS LLC [US]) 5 March 2014 (2014-03-05) * the whole document * | 1-15 | INV. A63B69/16 A63B21/005 A63B21/22 A63B22/06 G01L3/00 ADD. A63B21/008 |
| Y | US 5 879 273 A (WEI MIKE [TW] ET AL) 9 March 1999 (1999-03-09) * column 1, line 62 - column 2, line 16; figures * | 1-15 | |
| Y | DE 10 2009 043949 A1 (SARIS CYCLING GROUP INC [US]) 11 March 2010 (2010-03-11) * paragraph [0025]; figure 4 * | 5,6 | |
| Y | US 4 475 408 A (BROWNING DOUGLAS [US]) 9 October 1984 (1984-10-09) * the whole document * | 1 | |
| Y | US 5 096 024 A (WU HUNG-CHI [TW]) 17 March 1992 (1992-03-17) * column 2, line 17 - line 24; figures * | 1 | |
| A | WO 2006/102529 A2 (SARIS CYCLING GROUP INC [US]; WATSON EDWARD M [US]; WENDT DAVID L [US]) 28 September 2006 (2006-09-28) * the whole document * | 1,15 | TECHNICAL FIELDS SEARCHED (IPC) A63B G01L |

The present search report has been drawn up for all claims

| Place of search | Date of completion of the search | Examiner |
|---|---|---|
| Munich | 16 October 2015 | Squeri, Michele |

EPO FORM 1503 03.82 (P04C01)

**ANNEX TO THE EUROPEAN SEARCH REPORT
ON EUROPEAN PATENT APPLICATION NO.**

EP 15 16 5995

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2015

| Patent document cited in search report | | Publication date | Patent family member(s) | | Publication date |
|---|---|---|---|---|---|
| EP 2703051 | A2 | 05-03-2014 | EP | 2703051 A2 | 05-03-2014 |
| | | | TW | 201427747 A | 16-07-2014 |
| | | | US | 2014171266 A1 | 19-06-2014 |
| | | | US | 2014171272 A1 | 19-06-2014 |
| US 5879273 | A | 09-03-1999 | NONE | | |
| DE 102009043949 | A1 | 11-03-2010 | DE | 102009043949 A1 | 11-03-2010 |
| | | | GB | 2463135 A | 10-03-2010 |
| | | | US | 2010050785 A1 | 04-03-2010 |
| | | | US | 2010280766 A1 | 04-11-2010 |
| US 4475408 | A | 09-10-1984 | NONE | | |
| US 5096024 | A | 17-03-1992 | NONE | | |
| WO 2006102529 | A2 | 28-09-2006 | EP | 1868695 A2 | 26-12-2007 |
| | | | US | 2006234840 A1 | 19-10-2006 |
| | | | US | 2008103030 A1 | 01-05-2008 |
| | | | WO | 2006102529 A2 | 28-09-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5656001 A
- US 20100179030 A
- US 6945917 B
- EP 2703051 A